# EUROPÄISCHE PATENTSCHRIFT

(11) **EP 1 213 129 B1**
(45) Veröffentlichungstag und Bekanntmachung des Hinweises auf die Patenterteilung: **15.09.2004**
(21) Anmeldenummer: 01128968.3
(22) Anmeldetag: 06.12.2001
(51) Int. Cl.: B29C 67/24, B29C 70/58, C08K 3/34, C08K 5/09, C08K 9/04

(54) **Permeationsreduzierter Nanoverbundwerkstoff, Verfahren zu dessen Herstellung und daraus hergestellter Tank**
Nanocomposite with reduced permeability, manufacturing method thereof and container therefrom
Nanocomposite présentant une perméabilité réduite, son procédé de fabrication et récipient obtenu avec ce nanocomposite

(30) Priorität: 11.12.2000 EP 00127061
(43) Veröffentlichungstag der Anmeldung: 12.06.2002
(73) Patentinhaber: Roth Werke GmbH, 35232 Dautphetal (DE)
(72) Erfinder: Brusius, Ute Dr., 25041 Marburg (DE); Heitz, Walter Prof.Dr., 35274 Kirchhain (DE); Hoffmann, Manfred, 67098 Bad Dürkheim (DE); Roth, Manfred, 35232 Dautphetal (DE)
(74) Vertreter: Rohmann, Michael, Dr.

(56) Entgegenhaltungen:
- EP-A- 0 747 451
- EP-A- 0 807 659
- EP-A- 0 952 187
- EP-A- 1 055 706
- EP-A- 1 108 599
- WO-A-00/34393
- WO-A-01/05880
- WO-A-99/00248
- WO-A-99/41299
- DE-A- 19 726 278
- US-A- 3 554 985
- US-A- 3 922 244
- US-A- 6 117 932
- DATABASE WPI Section Ch, Week 198551 Derwent Publications Ltd., London, GB; Class A18, AN 1985-320988 XP002188846 & JP 60 224896 A (SUMITOMO NAUGATUCK KK), 9. November 1985 (1985-11-09)

## Beschreibung

Die Erfindung betrifft ein permeationsreduziertes Kunststoffmaterial, insbesondere für Behälter zur Aufnahme von fluiden Medien, wobei eine Kunststoffmatrix aus zumindest einem Kunststoff vorgesehen ist, wobei diese Kunststoffmatrix eine Mischung aus zumindest einem Schichtsilikat und zumindest einer polymeren Verbindung enthält, wobei der Anteil des Schichtsilikates in dem Kunststoffmaterial 0,5 bis 10 Gew.-% beträgt, wobei die polymere Verbindung ein Copolymerisat aus zumindest einem ungesättigten Kohlenwasserstoff und aus zumindest einer ungesättigten Carbonsäure und/oder zumindest eines Derivates einer ungesättigten Carbonsäure ist und wobei die polymere Verbindung als Ammoniumsalz vorliegt. Die Erfindung betrifft fernerhin ein Verfahren zur Herstellung eines permeationsreduzierten Kunststoffmaterials. Die Erfindung bezieht sich außerdem auf einen Kunststofftank bzw. Kunststoffbehälter aus einem permeationsreduzierten Kunststoffmaterial. - Die Erfindung befasst sich mit einem permeationsreduzierten Kunststoffmaterial, das vorzugsweise zur Herstellung von Behältern zur Aufnahme von Flüssigkeiten oder Gasen eingesetzt wird. Es liegt aber auch im Rahmen der Erfindung, dass das erfindungsgemäße Kunststoffmaterial zur Herstellung von Behältern für die Aufnahme beliebiger Materialien verwendet wird, oder dass das Kunststoffmaterial für andere Zwecke eingesetzt wird. Permeationsreduzierung meint im Rahmen der Erfindung insbesondere, dass die Permeation von fluiden Medien durch das erfindungsgemäße Kunststoffmaterial bzw. durch Wandungen aus dem erfindungsgemäßen Kunststoffmaterial weitgehend unterdrückt wird.

Es sind verschiedene Behälter zur Aufnahme von flüssigen Kohlenwasserstoffen bekannt, die z. B. aus Polyolefinen oder Polyamiden bestehen. Dabei handelt es sich um Kraftstofftanks oder Heizöltanks. Vor allem bei längerer Lagerdauer können die flüssigen Inhaltsstoffe aufgrund von Permeation durch die Behälterwände hindurchtreten. Es versteht sich, dass dies nicht zuletzt aus umwelttechnischen Gründen nicht in Kauf genommen werden kann. Um die Verluste an den flüssigen Inhaltsstoffen zu minimieren, sind in der Praxis verschiedene Maßnahmen zur Reduzierung der Permeation bekannt. Beispielsweise werden Kraftstoffbehälter zur Verminderung der Permeation des Kraftstoffes mit einer fluorierten, sulfonierten oder plasmapolymerisierten Oberfläche versehen. Außerdem ist es bekannt, dass die Wandungen von Heizöltanks zur Reduzierung der Permeation aus Blends von Polyethylen und beispielsweise Polyamid bestehen. Die Permeationseigenschaften dieser bekannten Kunststoffbehälter lassen jedoch zu wünschen übrig.

Ein permeationsreduziertes Kunststoffmaterial, wobei eine Kunststoffmatrix aus zumindest einem Kunststoff vorgesehen ist, wobei diese Kunststoffmatrix eine Mischung aus zumindest einem Schichtsilikat und zumindest einer polymeren Verbindung enthält, wobei der Anteil des Schichtsilikates in dem Kunststoffmaterial 1 bis 4,5 Gew.-% beträgt, wobei die polymere Verbindung ein Copolymerisat aus zumindest einem ungesättigten Kohlenwasserstoff und aus zumindest einer ungesättigten Carbonsäure und/oder zumindest eines Derivates einer ungesättigten Carbonsäure ist und wobei die polymere Verbindung als Ammoniumsalz vorliegt, von dem die Erfindung ausgeht, ist aus EP 0 747 451 A bekannt.

Aus EP 0 807 659 A ist ein Kunststoffmaterial auf Polyolefinbasis bekannt, das eine hohe Schlagfestigkeit und Hitzebeständigkeit aufweisen soll. Dieses Kunststoffmaterial soll sich vor allem zur Herstellung von Kraftfahrzeugkomponenten, von elektrischen Haushaltswaren, von Flugzeugteilen und anderen Konstruktionsmaterialien eignen. In dem Kunststoffmaterial können Schichtsilikate vorhanden sein.

Demgegenüber liegt der Erfindung das technische Problem zugrunde, ein Kunststoffmaterial anzugeben, mit dem die Permeation von fluiden Medien durch das Kunststoffmaterial effektiv reduziert wird, wobei insbesondere die Permeation von flüssigen Kohlenwasserstoffen/Kohlenwasserstoffgemischen und vor allem auch die Permeation von Kraftstoffen und Heizölen durch das Kunststoffmaterial wirksam reduziert wird und das sich durch vorteilhafte Eigenschaften im Brandfall auszeichnet und bei dem die vorstehend beschriebenen Nachteile nicht auftreten.

Zur Lösung dieses technischen Problems lehrt die Erfindung ein permeationsreduziertes Kunststoffmaterial, insbesondere für Behälter zur Aufnahme von fluiden Medien,
wobei eine Kunststoffmatrix aus zumindest einem Kunststoff vorgesehen ist,
wobei diese Kunststoffmatrix eine Mischung aus zumindest einem Schichtsilikat und zumindest einer polymeren Verbindung enthält,
wobei der Anteil des Schichtsilikates in dem Kunststoffmaterial 0,5 bis 10 Gew.-%, vorzugsweise 1 bis 4,5 Gew.-% beträgt,
wobei die polymere Verbindung ein Copolymerisat aus zumindest einem ungesättigten Kohlenwasserstoff mit zumindest 10 Kohlenstoffatomen und maximal 100 Kohlenstoffatomen und zumindest einer ungesättigten Carbonsäure und/oder zumindest eines Derivates einer ungesättigten Carbonsäure ist,
und wobei die polymere Verbindung als Ammoniumsalz vorliegt. - Der Anteil des Schichtsilikates bezieht sich auf das gesamte Kunststoffmaterial aus Kunststoff, polymerer Verbindung und Schichtsilikat. - Carboxylatgruppe meint eine Carboxylgruppe in Anionenform (-COO⁻). Diesem Carboxylatanion ist erfindungsgemäß ein Ammoniumkation zugeordnet, so dass die polymere Verbindung als Ammoniumsalz vorliegt.

Schichtsilikat meint im Rahmen der Erfindung Silikate mit blättchenförmiger bzw. plättchenförmiger Struktur. Solche Schichtsilikate werden auch als Nanosilikate bezeichnet. Grundsätzlich ist es aus dem Stand der Technik bekannt, Schichtsilikate in Polymeren bzw. Kunststoffen zu dispergieren. Die resultierenden Produkte werden als Nanocomposites bezeichnet. - Mit der als Ammoniumsalz vorliegenden polymeren Verbindung wird erfindungsgemäß ein Schichtsilikat modifiziert. Dieses modifizierte Schichtsilikat wird zur Veränderung bzw. Verbesserung der Eigenschaften der Kunststoffmatrix in die Kunststoffmatrix eingebracht.

Kunststoffmatrix meint im Rahmen der Erfindung eine Kunststoffmasse, in der das Schichtsilikat bzw. das modifizierte Schichtsilikat verteilt ist. Vorzugsweise liegt eine gleichmäßige, homogene Verteilung des modifizierten Schichtsilikates in der Kunststoffmatrix vor. Insoweit liegt es im Rahmen der Erfindung, dass das modifizierte Schichtsilikat in der Kunststoffmatrix vollständig dispergiert wird und mindestens teilweise als monomolekulare Schicht vorliegt.

Nach einer Ausführungsform der Erfindung besteht die Kunststoffmatrix aus zumindest einem Polyolefin. Bei dem Polyolefin kann es sich um ein Polyethylen und/oder Polypropylen und/oder Polybutylen handeln. Nach sehr bevorzugter Ausführungsform, der im Rahmen der Erfindung ganz besondere Bedeutung zukommt, besteht die Kunststoffmatrix aus Polyethylen. Kunststoffmatrix aus Polyethylen meint hier insbesondere eine Matrix aus reinem Poylethylen oder aus ethylenhaltigen Copolymerisaten mit zumindest einem Alken, beispielsweise Buten, Hexen oder Octen. Es liegt jedoch auch im Rahmen der Erfindung, eine Kunststoffmatrix aus Polyethylen-Blends einzusetzen, die hauptsächlich Polyethylen enthalten bzw. über 50 Gew.-% Polyethylen enthalten.

Nach einer anderen Ausführungsform der Erfindung besteht die Kunststoffmatrix aus zumindest einem Kunststoff aus der Gruppe "Polyamid, Polyester, Polyol, Polyurethan, Polystyrol, Kautschuk". Es liegt auch im Rahmen der Erfindung, dass die Kunststoffmatrix aus zumindest einem Copolymer der vorgenannten Kunststoffe besteht. Als Polyamid kann z. B. Polyamid 6 eingesetzt werden. Wenn die Kunststoffmatrix aus zumindest einem Polyol besteht, kann beispielsweise Polypropylenglykol verwendet werden. Als Kautschuk für die Kunststoffmatrix können z. B. Polyisopren, Poly(styrol-co-butadien) oder Poly(acrylnitril-co-butadien) eingesetzt werden. Als Material für die Kunststoffmatrix kann nach einer Ausführungsform Butadien-Kautschuk verwendet werden. Gemäß einer anderen Ausführungsform der Erfindung besteht die Kunststoffmatrix aus zumindest einem Kunststoff aus der Gruppe "Polyalkylenterephthalat, Polyalkylenoxid, Polyvinylalkohol, Polycarbonat". Als Polyalkylenterephthalat kann beispielsweise Polybutylenterephthalat für die Kunststoffmatrix eingesetzt werden. Es liegt auch im Rahmen der Erfindung, dass die Kunststoffmatrix aus zumindest einem Kunststoff aus der Gruppe "Polyvinylpyrolidon, Polyimid, Polycaprolacton, Polyoxymethylen, Polyvinylchlorid" besteht. Fernerhin liegt es im Rahmen der Erfindung, dass für die Kunststoffmatrix zumindest ein Copolymer aus den vorgenannten Kunststoffen eingesetzt wird.

Durch Erbringen des mit der erfindungsgemäßen polymeren Verbindung modifizierten Schichtsilikates in die Kunststoffmatrix werden bestimmte Eigenschaften des Kunststoffes beachtlich verbessert. Zunächst wird mit der erfindungsgemäßen Lehre eine überraschend weitgehende Permeationsreduzierung des Kunststoffes erzielt. Außerdem werden durch die erfindungsgemäße Behandlung des Kunststoffes überraschende Brandschutzeigenschaften verwirklicht. In einem Brandfall wird das Brennen bzw. Weiterbrennen eines Gegenstandes aus dem erfindungsgemäß behandelten Kunststoff minimiert bzw. völlig verhindert. Auch das Abtropfen des im Brandfall stark erhitzten Kunststoffes kann durch die erfindungsgemäße Behandlung beachtlich reduziert werden. - Die Begriffe Kunststoff und Kunststoffmatrix meinen im Rahmen der Erfindung die Kunststoffsubstanz, die erfindungsgemäß mit dem Schichtsilikat und der zumindest einen polymeren Verbindung versetzt wird bzw. behandelt wird. Der Ausdruck Kunststoffmaterial bzw. erfindungsgemäßes Kunststoffmaterial meint den bereits mit dem Schichtsilikat und mit der zumindest einen polymeren Verbindung versetzten Kunststoff.

Grundsätzlich können im Rahmen der Erfindung verschiedene Schichtsilikate, beispielsweise Talk, Glimmer oder anorganische Pigmente eingesetzt werden. Nach einer sehr bevorzugten Ausführungsform, der im Rahmen der Erfindung besondere Bedeutung zukommt, ist als Schichtsilikat ein Montmorillonit eingesetzt. Nach einer anderen bevorzugten Ausführungsform der Erfindung ist als Schichtsilikat Bentonit eingesetzt. Neben den vorgenannten natürlichen Schichtsilikaten können aber auch synthetische Schichtsilikate verwendet werden. Mit solchen synthetischen Schichtsilikaten kann insbesondere die Transparenz der Kunststoffmatrix auf wirksame Weise eingestellt werden.

Sehr bevorzugt ist im Rahmen der Erfindung ein permeationsreduziertes Kunststoffmaterial, bei dem der Anteil des Schichtsilikates in dem Kunststoffmaterial 1 bis 4 Gew.-%, vorzugsweise 1 bis 3,5 Gew.-%, bevorzugt 1,2 bis 3,3 Gew.-%, sehr bevorzugt 1,4 bis 3,1 Gew.-%. Nach einer besonders bevorzugten Ausführungsform der Erfindung beträgt der Anteil des Schichtsilikates in dem Kunststoffmaterial 1,5 bis 3 Gew.-%.

Nach einer sehr bevorzugten Ausführungsform, der im Rahmen der Erfindung ganz besondere Bedeutung zukommt, weist die polymere Verbindung an zumindest zwei benachbarten Kohlenstoffatomen jeweils zumindest eine Carboxylatgruppe und/oder eine Carboxylgruppe auf. So liegt es im Rahmen der Erfindung, dass an einem Kohlenstoffatom der polymeren Verbindung eine Carboxylatgruppe (-COO⁻) und an einem benachbarten Kohlenstoffatom der polymeren Verbindung eine Carboxylgruppe (-COOH) angeschlossen ist. Statt der Carboxylgruppe kann grundsätzlich an dem benachbarten Kohlenstoffatom auch eine Estergruppe (-COOR) oder eine Amidgruppe (-CONHR) angeschlossen sein.

Es liegt im Rahmen der Erfindung, dass die als Ammoniumsalz vorliegende polymere Verbindung ein Tetraalkylammoniumion aufweist. Dem Carboxylation ist in der polymeren Verbindung somit ein quartäres Ammoniumion NR₄⁺ zugeordnet. Vorzugsweise weist die polymere Verbindung ein Trimethylalkylammoniumion auf, bei der an das N-Atom drei Methylgruppen sowie eine andere davon unterschiedliche Alkylgruppe angeschlossen ist. Es liegt auch im Rahmen der Erfindung, dass die polymere Verbindung ein quartäres Alkylaryl-, Dialkylaryl- oder Trialkylarylammoniumion aufweist.

Gegenstand der Erfindung ist auch ein Verfahren zur Herstellung eines permeationsreduzierten Kunststoffmaterials,
wobei eine polymere Verbindung durch Copolymerisation von zumindest einem ungesättigten Kohlenwasserstoff mit zumindest zehn Kohlenstoffatomen und maximal 100 Kohlenstoffatomen mit zumindest einer ungesättigten Carbonsäure und/oder mit zumindest einem Derivat einer ungesättigten Carbonsäure hergestellt wird,
wobei die polymere Verbindung als Ammoniumsalz hergestellt wird und mit zumindest einem Schichtsilikat gemischt wird und wobei das mit der polymeren Verbindung modifizierte Schichtsilikat in die Kunststoffmatrix mit der Maßgabe eingebracht wird, dass der Anteil des Schichtsilikates in dem Kunststoffmaterial 0,5 bis 10 Gew.-%, vorzugsweise 1 bis 4,5 Gew.-% beträgt. - Es liegt dabei im Rahmen der Erfindung, dass zunächst eine polymere Basisverbindung hergestellt wird, die Carboxylgruppen (-COOH) enthält. Zu dieser polymeren Basisverbindung wird dann vorzugsweise ein quartäres Ammoniumsalz gegeben. Hierbei handelt es sich zweckmäßigerweise um ein Ammoniumhalogenid, vorzugsweise ein Tetraalkylammoniumhalogenid NR₄X (vorzugsweise ist X = Cl, Br). Erfindungsgemäß werden Carboxylgruppen der polymeren Basisverbindung in Carboxylatgruppen bzw. Carboxylationen überführt, denen dann quartäre Ammoniumkationen zugeordnet sind, so dass die polymere Verbindung als Ammoniumsalz vorliegt.

Nach einer sehr bevorzugten Ausführungsform der Erfindung wird die polymere Verbindung durch Copolymerisation des zumindest einen ungesättigten Kohlenwasserstoffes mit zumindest einer ungesättigten polyvalenten Carbonsäure und/oder mit zumindest einem Derivat einer ungesättigten polyvalenten Carbonsäure hergestellt.

Nach einer Ausführungsform der Erfindung weist der ungesättigte Kohlenwasserstoff lediglich eine C-C-Doppelbindung auf. Es liegt im Rahmen der Erfindung, ein α-Olefin als ungesättigten Kohlenwasserstoff einzusetzen. Dabei kann auch eine Mischung von α-Olefinen verwendet werden. Vorzugsweise weist der ungesättigte Kohlenwasserstoff, insbesondere das α-Olefin mehr als 20 Kohlenstoffatome auf, bevorzugt mehr als 25 Kohlenstoffatome auf. Der ungesättigte Kohlenwasserstoff, insbesondere das α-Olefin, kann beispielsweise 25 bis 50 Kohlenstoffatome besitzen.

Polyvalente Carbonsäure meint im Rahmen der Erfindung eine Carbonsäure mit mehr als einer Carboxylgruppe. Nach sehr bevorzugter Ausführungsform, der im Rahmen der Erfindung ganz besondere Bedeutung zukommt, wird dabei eine polyvalente Carbonsäure eingesetzt, die jeweils eine Carboxylgruppe an zwei benachbarten Kohlenstoffatomen aufweist oder es wird ein Derivat einer solchen polyvalenten Carbonsäure eingesetzt. Derivat einer Carbonsäure meint im Rahmen der Erfindung insbesondere ein Säureanhydrid oder ein Säureester.

Nach sehr bevorzugter Ausführungsform weist die als Ammoniumsalz vorliegende polymere Verbindung die nachfolgend dargestellte Struktur auf:

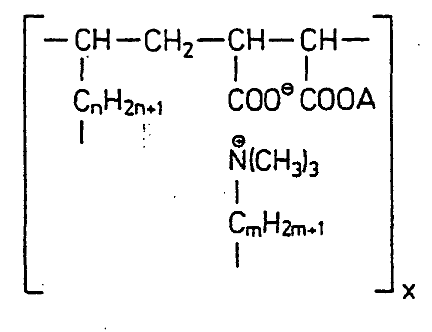

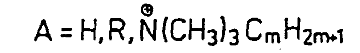

In dieser Formel gilt n ≥ 16 und m ≤ 20. Außerdem gilt vorzugsweise x = 1-100, bevorzugt x = 2-100.

Nach sehr bevorzugter Ausführungsform, der im Rahmen der Erfindung ganz besondere Bedeutung zukommt, wird die polymere Verbindung durch Copolymerisation des ungesättigten Kohlenwasserstoffs mit zumindest einer ungesättigten Dicarbonsäure und/oder mit zumindest einem Derivat einer ungesättigten Dicarbonsäure hergestellt. Dabei wird vorzugsweise eine Dicarbonsäure eingesetzt, die an zwei benachbarten Kohlenstoffatomen jeweils eine Carboxylgruppe aufweist oder es wird ein Derivat einer solchen Dicarbonsäure verwendet. Im Rahmen der Erfindung können als ungesättigte Dicarbonsäuren zweckmäßigerweise Maleinsäure oder Fumarsäure eingesetzt werden. Als Derivat einer ungesättigten Dicarbonsäure können vorzugsweise Maleinsäureanhydrid oder ein Maleinssäureester oder ein Fumarsäureester verwendet werden.

Nach sehr bevorzugter Ausführungsform der Erfindung nehmen an der Copolymerisationsreaktion lediglich der zumindest eine ungesättigte Kohlenwasserstoff und die zumindest eine ungesättigte Carbonsäure und/oder das zumindest eine Derivat der ungesättigten Carbonsäure teil. Mit anderen Worten werden weitere Monomere zweckmäßigerweise an der Polymerisation nicht beteiligt. Natürlich kann zur Initiierung der Polymerisation bzw. Copolymerisation zumindest ein Initiator zugesetzt werden.

Eine sehr bevorzugte Ausführungsform des erfindungsgemäßen Verfahrens ist dadurch gekennzeichnet, dass die Herstellung der polymeren Verbindung als Ammoniumsalz und die Mischung mit dem Schichtsilikat in einem Verfahrensschritt erfolgt. Das auf diese Weise modifizierte Schichtsilikat wird dann in die Kunststoffmatrix eingebracht. Gemäß dieser bevorzugten Ausführungsform der Erfindung kann die Herstellung der polymeren Verbindung als Ammoniumsalz und die Modifizierung des Schichtsilikates in einem Verfahrensschritt und somit gleichsam gleichzeitig durchgeführt werden. Herstellung des Ammoniumsalzes meint dabei zweckmäßigerweise, dass zu der polymeren Basisverbindung, die zumindest eine Carboxylgruppe oder zumindest eine Carboxylatgruppe enthält, ein erstes Ammoniumsalz gegeben wird, so dass die polymere Verbindung in Form eines Ammoniumsalzes gebildet wird. Durch die letztgenannte Ausführungsform des erfindungsgemäßen Verfahrens werden gegenüber aus dem Stand der Technik bekannten Modifizierungen von Schichtsilikaten die Anzahl der Verfahrensschritte beachtlich reduziert und somit wird auch der Aufwand reduziert.

Es liegt im Rahmen der Erfindung, dass das modifizierte Schichtsilikat zunächst zu einer geringen Menge des Kunststoffes gemischt wird, so dass eine Mischung (Masterblend) mit einem Gehalt zwischen 20 und 60 Gew.% an dem Schichtsilikat erhalten wird. Im Anschluss daran wird dieses Masterblend mit der übrigen Menge Kunststoff gemischt. Das Mischen des modifizierten Schichtsilikates mit dem Kunststoff findet zweckmäßigerweise während eines Extrusionsvorganges statt.

Der Erfindung liegt die Erkenntnis zugrunde, dass ein Kunststoffmaterial mit hervorragender Permeationsreduzierung hergestellt werden kann, wenn die erfindungsgemäßen Maßnahmen verwirklicht werden. Es muss aber betont werden, dass nicht nur eine optimale Permeationsreduzierung erreicht wird, sondern zusätzlich sowohl eine überraschend hohe Steifigkeit als auch eine überraschend hohe Oberflächenpolarität des Kunststoffmaterials erzielt wird. Der Erfindung liegt fernerhin die Erkenntnis zugrunde, dass sich Schichtsilikate, insbesondere Montmorillonit und/oder Bentonit aber auch synthetische Schichtsilikate, einfach und problemlos in einer Kunststoffmatrix verteilen bzw. dispergieren lassen, wenn die erfindungsgemäße Lehre realisiert wird. Aufgrund der genannten erhöhten Steifigkeit und der erhöhten Oberflächenpolarität des erfindungsgemäßen Kunststoffmaterials ist der Einsatz dieses Materials nicht lediglich auf Verwendungszwecke beschränkt, bei denen eine reduzierte Permeation gewünscht wird. Vielmehr lässt sich das erfindungsgemäße Kunststoffmaterial auch für andere Zwecke einsetzen, wenn beispielsweise eine hervorragende Steifigkeit und/oder eine hohe Oberflächenpolarität gewünscht wird. Das Kunststoffmaterial weist im übrigen noch eine Mehrzahl von weiteren Vorteilen auf. So zeichnet sich das erfindungsgemäße Kunststoffmaterial durch eine hervorragende Wärmeformbeständigkeit sowie durch optimale Tiefzieheigenschaften aus.

Behälterwandungen, die aus dem erfindungsgemäßen Kunststoffmaterial gefertigt sind, zeigen eine überraschend geringe Permeation von fluiden Medien. Das erfindungsgemäße Kunststoffmaterial lässt insbesondere eine Permeation von flüssigen Kohlenwasserstoffen bzw. Kohlenwasserstoffgemischen weitestgehend nicht zu. Durch die erfindungsgemäß in dem Kunststoff dispergierten modifizierten Schichtsilikate werden somit die Barriereeigenschaften des Kunststoffes gegenüber fluiden Medien, insbesondere gegenüber Kohlenwasserstoffen/Kohlenwasserstoffgemischen überraschend verbessert. Die erfindungsgemäße hervorragende Sperrwirkung gegen Permeation von Gasen und Flüssigkeiten konnte der Fachmann im Lichte des Standes der Technik nicht erwarten. - Zusätzlich zu den optimalen Sperrwirkungseigenschaften weist das erfindungsgemäße Kunststoffmaterial außerdem auch optimale mechanische Eigenschaften und verbesserte Oberflächeneigenschaften auf. Neben einer hohen Sperrwirkung bzw. neben positiven Permeationseigenschaften wird die Steifigkeit erhöht und die Schlagzähigkeit des Kunststoffmaterials wird nicht nachteilhaft beeinträchtigt. Damit lassen sich Bauteilgeometrien vereinfachen, Behälterwanddicken verringern und Material einsparen. Die optimalen polaren Eigenschaften der Oberflächen aus dem erfindungsgemäßen Kunststoffmaterial verbessern die Benetzung, so dass problemlos Beschichtungen, beispielsweise Lackierungen und Bedruckungen aufgebacht werden können.

Es wurde bereits darauf hingewiesen, dass das erfindungsgemäße Kunststoffmaterial insbesondere überraschende Brandschutzeigenschaften aufweist, so dass im Brandfall ein Weiterbrennen des Kunststoffmaterials verhindert wird und zusätzlich auch ein Abtropfen von geschmolzenem Kunststoffmaterial minimiert wird.

Gegenstand der Erfindung ist auch die Verwendung eines erfindungsgemäßen permeationsreduzierten Kunststoffmaterials, bei dem in eine Kunststoffmatrix das erfindungsgemäß modifizierte Schichtsilikat eingebracht ist, als Behälter für fluide Medien, insbesondere als Behälter für kohlenwasserstoffhaltige fluide Medien. Vorzugsweise kann das erfindungsgemäße permeationsreduzierte Kunststoffmaterial zur Herstellung von Behältern für die Aufnahme von Kraftstoffen und Heizölen verwendet werden. Insoweit wird das erfindungsgemäße Kunststoffmaterial insbesondere für großvolumige Behälter, vor allem Lager- und Transportbehälter eingesetzt. Wenn die Behälterwandungen aus dem erfindungsgemäßen Kunststoffmaterial bestehen, wird wie oben bereits ausgeführt, die Permeation der fluiden Medien durch die Behälterwandung weitgehend verhindert. Das trifft insbesondere auch bei längerer Lagerung der fluiden Medien in den betreffenden Behältern zu. - Gegenstand der Erfindung ist auch ein Kunststofftank nach Anspruch 10 aus einem permeationsreduzierten Kunststoffmaterial, insbesondere zur Aufnahme von kohlenwasserstoffhaltigen fluiden Medien.

Nachfolgend wird das erfindungsgemäße Verfahren anhand eines Ausführungsbeispiels näher erläutert:

Bei einer Reaktionstemperatur von 100 °C wurden unter starkem Rühren 673,12 g (1,6 mol) C₃₀H₆₀ mit 94,12 g (0,94 mol) Maleinsäureanhydrid und 39,48 g (0,24 mol) Azobisisobutyronitril (AIBN) zur Reaktion gebracht. Die Gesamtmenge an AIBN wurde in sieben Teilportionen innerhalb der ersten sechs Stunden hinzugefügt. Danach wurde noch eine Stunde bei Reaktionstemperatur nachgerührt. Der gesamte Ansatz wurde anschließend durch eine Heiß-Druckfiltration über 30 g Kieselgel gereinigt. Nach einer Vakuumbehandlung bei 80 °C/10 mbar erhielt man 723,63 g eines cremefarbenen Festproduktes.

Es wurden 8 g (0,2 mol) Natriumhydroxid mit 20 ml Wasser vorgelegt. Dazu wurden 256,08 g (0,2 mol) Cetyltrimethylammoniumchlorid (25 Gew.%ige Lösung in Wasser) und 103,78 g des obengenannten Festproduktes gegeben. Diese Mischung wurde bei 80 °C vier Stunden lang gerührt. Dann wurde die Emulsion mit halbkonzentrierter Salzsäure neutralisiert. Anschließend wurden 311,34 g nichtmodifiziertes Montmorillonit zugegeben und der Ansatz mit Wasser auf ein Gesamtvolumen von 1,5 l aufgefüllt. Diese Mischung wurde für weitere fünf Stunden bei 80 °C homogenisiert, bevor sie unter Rühren auf 5 °C abgekühlt wurde. Der Ansatz wurde abgesaugt und das zurückbleibende Material portionsweise mit insgesamt 4 l eiskaltem Wasser gewaschen. Nach der Trocknung bei 35 °C/15 mbar erhielt man 432,93 g eines grau-pulvrigen Materials.

In einem Extruder wurden bei 180°C mit 150 U/min 231,0 g des grau-pulvrigen Materials mit 269 g Polyethylen zu einem PE-Blend gemischt, das 30 % Montmorillonit enthält. Zu dem PE-Blend werden dann 4,5 kg Polyethylen zugefügt bzw. zugemischt und in dem letztendlich erhaltenden Kunststoffmaterial sind dann 2 Gew.-% Montmorillonit enthalten.

## Patentansprüche

1. Permeationsreduziertes Kunststoffmaterial, insbesondere für Behälter zur Aufnahme von fluiden Medien,
wobei eine Kunststoffmatrix aus zumindest einem Kunststoff vorgesehen ist,
wobei diese Kunststoffmatrix eine Mischung aus zumindest einem Schichtsilikat und zumindest einer polymeren Verbindung enthält,
wobei der Anteil des Schichtsilikates in dem Kunststoffmaterial 0,5 bis 10 Gew.-%, vorzugsweise 1 bis 4,5 Gew.-% beträgt,
wobei die polymere Verbindung ein Copolymerisat aus zumindest einem ungesättigten Kohlenwasserstoff mit zumindest zehn Kohlenstoffatomen und maximal 100 Kohlenstoffatomen und aus zumindest einer ungesättigten Carbonsäure und/oder zumindest eines Derivates einer ungesättigten Carbonsäure ist
und wobei die polymere Verbindung als Ammoniumsalz vorliegt.

2. Permeationsreduziertes Kunststoffmaterial nach Anspruch 1, wobei die Kunststoffmatrix aus zumindest einem Polyolefin, vorzugsweise aus Polyethylen, und/oder aus zumindest Polyamid, Polyester, Polyol, Polyurethan, Polystyrol oder Kautschuk besteht.

3. Permeationsreduziertes Kunststoffmaterial nach einem der Ansprüche 1 oder 2, wobei der Anteil des Schichtsilikates in dem Kunststoffmaterial 1 bis 4 Gew.-%, vorzugsweise 1 bis 3,5 Gew.-% beträgt.

4. Permeationsreduziertes Kunststoffmaterial nach einem der Ansprüche 1 bis 3, wobei die polymere Verbindung an zumindest zwei benachbarten Kohlenstoffatomen jeweils zumindest eine Carboxylatgruppe und/oder eine Carboxylgruppe aufweist.

5. Permeationsreduziertes Kunststoffmaterial nach einem der Ansprüche 1 bis 4, wobei die als Ammoniumsalz vorliegende polymere Verbindung ein Tetraalkylammoniumion aufweist.

6. Verfahren zur Herstellung eines permeationsreduzierten Kunststoffmaterials,
wobei eine polymere Verbindung durch Copolymerisation von zumindest einem ungesättigten Kohlenwasserstoff mit zumindest zehn Kohlenstoffatomen und maximal 100 Kohlenstoffatomen mit zumindest einer ungesättigten Carbonsäure und/oder mit zumindest einem Derivat einer ungesättigten Carbonsäure hergestellt wird,
wobei die polymere Verbindung als Ammoniumsalz hergestellt wird und mit zumindest einem Schichtsilikat gemischt wird und wobei das mit der polymeren Verbindung modifizierte Schichtsilikat in eine Kunststoffmatrix aus zumindest einem Kunststoff mit der Maßgabe eingebracht wird, dass der Anteil des Schichtsilikates in dem Kunststoffmaterial 0,5 bis 10 Gew.-%, vorzugsweise 1 bis 4,5 Gew.-% beträgt.

7. Verfahren nach Anspruch 6, wobei die polymere Verbindung durch Copolymerisation des ungesättigten Kohlenwasserstoffes mit zumindest einer ungesättigten polyvalenten Carbonsäure und/oder mit zumindest einem Derivat einer ungesättigten polyvalenten Carbonsäure hergestellt wird.

8. Verfahren nach Anspruch 7, wobei die polymere Verbindung durch Copolymerisation des ungesättigten Kohlenwasserstoffs mit zumindest einer ungesättigten Dicarbonsäure und/oder mit zumindest einem Derivat einer ungesättigten Dicarbonsäure hergestellt wird.

9. Verfahren nach einem der Ansprüche 6 bis 8, wobei die Herstellung der polymeren Verbindung in der Form als Ammoniumsalz und die Mischung mit dem Schichtsilikat in einem Verfahrenschritt erfolgt und das auf diese Weise modifizierte Schichtsilikat in die Kunststoffmatrix eingebracht wird.

10. Kunststofftank aus einem permeationsreduzierten Kunststoffmaterial nach einem der Ansprüche 1 bis 5 zur Aufnahme von fluiden Medien, insbesondere zur Aufnahme von kohlenwasserstoffhaltigen fluiden Medien.

## Claims

1. Permeation reducing polymer material, in particular for containers for holding liquid media,
a polymer matrix of at least one polymer being provided,
this polymer matrix containing a mixture of at least one layer silicate and at least one polymeric compound,
the proportion of layer silicates in the polymer material being 0.5 to 10 % by wt., preferably 1 to 4.5 % by wt.,
the polymeric compound being a copolymer of at least one unsaturated hydrocarbon with at least ten carbon atoms and maximum 100 carbon atoms and at least one unsaturated carboxylic acid and/or at least one derivative of an unsaturated carboxylic acid
and the polymer compound being present as ammonium salt.

2. Permeation reducing polymer material according to claim 1, the polymer matrix consisting of at least one polyolefin, preferably of polyethylene, and/or of at least polyamide, polyester, polyol, polyurethane, polystyrene or rubber.

3. Permeation reducing polymer material according to one of claims 1 or 2, the proportion of the layer silicate in the polymer material amounting to 1 to 4 % by wt., preferably 1 to 3,5 % by wt.

4. Permeation reducing polymer material according to one of claims 1 to 3, the polymeric compound having at least one carboxylate group and/or one carboxyl group each on at least two neighbouring carbon atoms.

5. Permeation reducing polymer material according to one of claims 1 to 4, the polymeric compound present as ammonium salt having a tetraalkyl ammonium ion.

6. Process for the production of a permeation reducing polymer material,
a polymeric compound being produced by copolymerization of at least one unsaturated hydrocarbon with at least ten carbon atoms and maximum 100 carbon atoms with at least one unsaturated carboxylic acid and/or with at least one derivative of an unsaturated carboxylic acid,
the polymeric compound being produced as ammonium salt and being mixed with at least one layer silicate and the layer silicate modified with the polymeric compound being introduced into a polymer matrix of at least one polymer with the proviso that the proportion of the layer silicate in the polymer material amounts to 0.5 to 10 % by wt., preferably 1 to 4.5 % by wt.

7. Process according to claim 6, the polymeric compound being produced by copolymerization of the unsaturated hydrocarbon with at least one unsaturated polyvalent carboxylic acid and/or with at least one derivative of an unsaturated polyvalent carboxylic acid.

8. Process according to claim 7, the polymeric compound being produced by copolymerization of the unsaturated hydrocarbon with at least one unsaturated dicarboxylic acid and/or with at least one derivative of an unsaturated dicarboxylic acid.

9. Process according to one of claim 6 to 8, the production of the polymeric compound in the form of ammonium salt and mixing with the layer silicate taking place in one process step and the layer silicate modified in this way being introduced into the polymer matrix.

10. Plastic tank of a permeation reducing polymer material according to one of claims 1 to 5 for holding liquid media, in particular for holding hydrocarbon-containing liquid media.

## Revendications

1. Matériau à base de matière plastique à perméation réduite, en particulier pour des réservoirs destinés à recevoir des milieux fluides, dans lequel une matrice de matière plastique en au moins une matière plastique est prévue, dans lequel cette matrice de matière plastique comprend un mélange d'au moins un phyllosilicate et d'au moins un composé polymère, dans lequel la part du phyllosilicate dans le matériau à base de matière plastique est de 0,5 à 10 % en poids, de préférence de 1 à 4,5 % en poids, dans lequel le composé polymère est un copolymérisat d'au moins un hydrocarbure insaturé à au moins dix atomes de carbone et à au plus 100 atomes de carbone et d'au moins un acide carboxylique insaturé et/ou d'au moins un dérivé d'un acide carboxylique insaturé, et dans lequel le composé polymère est présent sous forme de sel d'ammonium.

2. Matériau à base de matière plastique à perméation réduite suivant la revendication 1, dans lequel la matrice de matière plastique se composant d'au moins une polyoléfine, de préférence de polyéthylène, et/ou d'au moins un polyamide, polyester, polyol, polyuréthanne, polystyrène ou caoutchouc.

3. Matériau à base de matière plastique à perméation réduite suivant l'une des revendications 1 et 2, dans lequel la part de phyllosilicate dans le matériau est de 1 à 4 % en poids, de préférence de 1 à 3,5 % en poids.

4. Matériau à base de matière plastique à perméation réduite suivant l'une des revendications 1 à 3, dans lequel le composé polymère comporte au moins un groupe carboxylate et/ou un groupe carboxyle sur au moins chacun de deux atomes de carbone voisins.

5. Matériau à base de matière plastique à perméation réduite suivant l'une des revendications 1 à 4, dans lequel le composé polymère, présent sous forme de sel d'ammonium, comporte un ion tétraalcoylammonium.

6. Procédé de préparation d'un matériau à base de matière plastique à perméation réduite, dans lequel un composé polymère est préparé par copolymérisation d'au moins un hydrocarbure insaturé à au moins dix atomes de carbone et à au plus 100 atomes de carbone avec au moins un acide carboxylique insaturé et/ou avec au moins un dérivé d'un acide carboxylique insaturé, dans lequel le composé polymère est préparé sous forme de sel d'ammonium et est mélangé à au moins un phyllosilicate, et dans lequel le phyllosilicate modifié par le composé polymère est introduit dans une matrice de matière plastique composée d'au moins une matière plastique sous réserve que la part de phyllosilicate dans le matériau à base de matière plastique soit de 0,5 à 10 % en poids, de préférence de 1 à 4,5 % en poids.

7. Procédé suivant la revendication 6, dans lequel le composé polymère est préparé par copolymérisation de l'hydrocarbure insaturé avec au moins un acide carboxylique polyvalent insaturé et/ou avec au moins un dérivé d'un acide carboxylique polyvalent insaturé.

8. Procédé suivant la revendication 7, dans lequel le composé polymère est préparé par copolymérisation de l'hydrocarbure insaturé avec au moins un acide dicarboxylique insaturé et/ou avec au moins un dérivé d'un acide dicarboxylique insaturé.

9. Procédé suivant l'une des revendications 6 à 8, dans lequel la préparation du composé polymère sous la forme de sel d'ammonium et le mélange avec le phyllosilicate ont lieu dans une étape de procédé, et dans lequel le phyllosilicate ainsi modifié est introduit dans la matrice de matière plastique.

10. Réservoir en matière plastique composé d'un matériau à base de matière plastique à perméation réduite suivant l'une des revendications 1 à 5 destiné à recevoir des milieux fluides, en particulier destiné à recevoir des milieux fluides contenant des hydrocarbures.
